# EUROPÄISCHE PATENTSCHRIFT

(11) **EP 1 790 869 B1**
(45) Veröffentlichungstag und Bekanntmachung des Hinweises auf die Patenterteilung: **09.05.2012**
(21) Anmeldenummer: 05025828.4
(22) Anmeldetag: 25.11.2005
(51) Int. Cl.: F16D 23/06

(54) **Schiebemuffe**
Sliding collar
Manchon coulissant

(43) Veröffentlichungstag der Anmeldung: 30.05.2007
(73) Patentinhaber: Hoerbiger Antriebstechnik GmbH, 86956 Schongau (DE)
(72) Erfinder: Echtler, Peter, 86975 Bernbeuren (DE); Bell, Rolf Karl, 53879 Euskirchen (DE)
(74) Vertreter: Kitzhofer, Thomas

(56) Entgegenhaltungen:
- DE-A1- 10 033 764
- DE-A1- 19 851 799
- DE-C1- 3 736 146
- US-A1- 2004 079 611
- US-B1- 6 216 550
- PATENT ABSTRACTS OF JAPAN Bd. 007, Nr. 254 (M-255), 11. November 1983 (1983-11-11) & JP 58 137625 A (FUJI TEKKOSHO:KK), 16. August 1983 (1983-08-16)

## Beschreibung

Die Erfindung betrifft eine Schiebemuffe für eine Synchronisiereinheit eines KFZ-Schaltgetriebes, gemäß dem Oberbegriff des Anspruches 1.

Eine derartige Schiebemuffe ist aus der DE 100 21 088 A1 oder der JP 58 137625 bekannt.

Demgegenüber stellt sich vorliegende Erfindung die Aufgabe, eine Schiebemuffe der im Oberbegriff des Anspruches 1 angegebenen Art zu schaffen, die auf einfache und kostengünstige sowie variable Art und Weise herstellbar ist und damit an verschiedene Einsatzzwecke anpassbar ist.

Die Lösung dieser Aufgabe erfolgt durch die Merkmale des Anspruchs 1.

Demgemäß wird eine Schiebemuffe für eine Synchronisiereinheit eines KFZ-Getriebes geschaffen, deren Ringkörper aus zumindest zwei, grundsätzlich jedoch einer beliebig großen Anzahl verzahnter Segmente aufgebaut ist. Die Segmente können hierbei durch verschiedenste Herstellverfahren, wie beispielsweise Gieß-, Schmiede-, Sinter- oder spangebende Verfahren hergestellt werden. Die Segmente weisen wie üblich an ihrem Innenumfang eine Innenverzahnung auf, deren Zahngeometrien entsprechend den Anforderungen unterschiedlich ausgebildet sein können.

Innerhalb einer Schiebemuffe können die Verzahnsegmente kombiniert werden, wobei es möglich ist, dass die Zusammenstellung für den Anwendungsfall optimierbar ist.

Die Gleitsteinführungen der Segmente bzw. der Schiebemuffe können in unterschiedlichsten Varianten hergestellt und ausgebildet werden, wie beispielsweise in einer Nut- oder Stegausbildung. Die Nuten und Stege können hierbei beispielsweise bei der Herstellung der Segmente angearbeitet oder später nach der Ringbildung des Ringkörpers durch entsprechende Verfahren angebracht werden.

Ferner ist es bei der Segmentfertigung möglich, Taschen oder Nuten oder ähnliche Zusatzelemente für die Aufnahme von Druckstücken ohne Nacharbeit zu integrieren.

Die Segmente des Ringkörpers der erfindungsgemäßen Schiebemuffe können durch entsprechende Verbindungsverfahren, wie geeignete Schweiß- oder Lötverfahren miteinander verbunden werden. Die Segmente können untereinander oder über die nutbildenden Stege bzw. über den Steg, der den Gleitsteineingriff bildet, verbunden werden.

Wahlweise können auch bei der Ringbildung die Segmente miteinander verbunden werden.

Da die erfindungsgemäße Schiebemuffe auf unterschiedlichste Art und Weise hergestellt werden kann, werden bevorzugterweise Herstellungs- und Fertigungsverfahren für die Segmente gewählt, die hinsichtlich der Anwendung eine kostengünstige Lösung darstellt.

Es ergeben sich mithin hinsichtlich der Anpassbarkeit an unterschiedliche Anwendungsfälle und die gewünschten Herstellungsverfahren eine Vielzahl von Varianten. Insbesondere ist hervorzuheben, dass hinsichtlich Länge und Anspitzungen frei wählbare Zahnformen ausgebildet werden können. Ferner können unterschiedliche Zahnformen miteinander kombiniert werden.

Die Unteransprüche haben vorteilhafte Weiterbildungen der Erfindung zum Inhalt.

In den Ansprüchen 6 bis 10 ist ein erfindungsgemäßes Verfahren zur Herstellung einer erfindungsgemäßen Schiebemuffe definiert.

Weitere Einzelheiten, Vorteile und Merkmale der vorliegenden Erfindung ergeben sich aus nachfolgender Beschreibung von Ausführungsbeispielen anhand der beigefügten Zeichnung. Darin zeigt:
- Fig. 1: eine Draufsicht auf eine erste Ausführungsform einer erfindungsgemäßen Schiebemuffe,
- Fig. 2: eine Schnittdarstellung eines der Segmente der Schiebemuffe gemäß Fig. 1,
- Fig. 3: eine der Fig. 1 entsprechende Darstellung einer zweiten Ausführungsform der Schiebemuffe, und
- Fig. 4: eine der Fig. 2 entsprechende Darstellung eines Segmentes der zweiten Ausführungsform der Schiebemuffe gemäß Fig. 3.

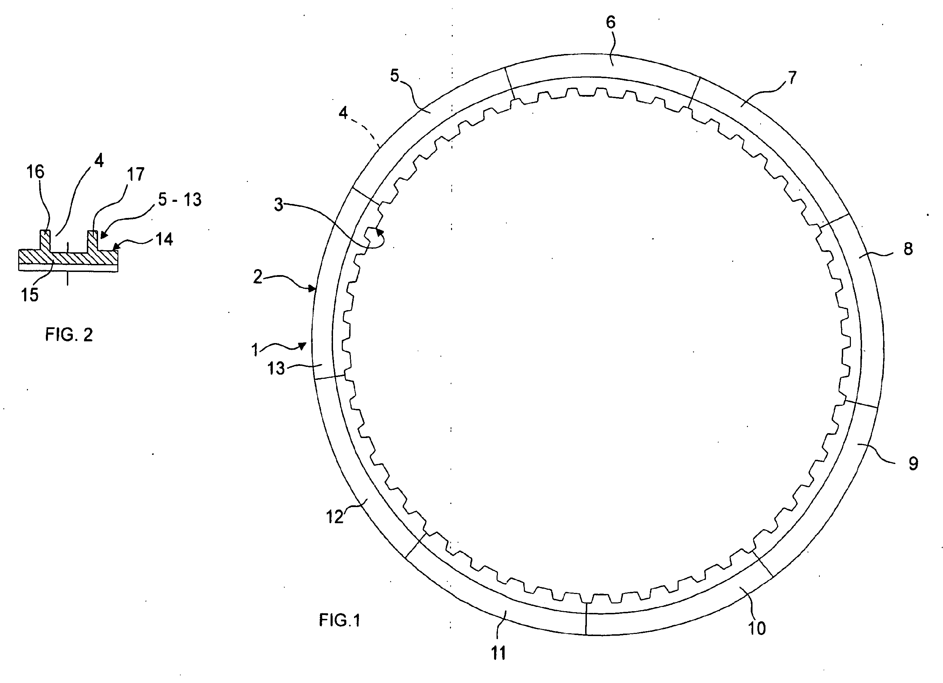

In Fig. 1 ist eine erfindungsgemäße Schiebemuffe 1 dargestellt, die einen Ringkörper 2 mit einer am Innenumfang angeordneten Innenverzahnung 3 und einer Schaltgabelnut 4 aufweist, die im Bereich des Außenumfangs des Ringkörpers 2 angeordnet ist.

Der Ringkörper 2 der erfindungsgemäßen Schiebemuffe 1 ist im Beispielsfalle aus neun Segmenten 5 bis 13 zusammengesetzt, die beispielsweise miteinander verschweißt oder verlötet werden können.

Wie Fig. 2 darstellt, sind die Segmente 5 bis 13 jeweils einteilig ausgebildet und weisen dementsprechend einen einstückigen Segmentkörper 14 auf, der einen Basisbereich 15 umfasst, an dem zwei Stege 16 und 17 einstückig angeformt sind, die die Schaltgabelnut 4 begrenzen.

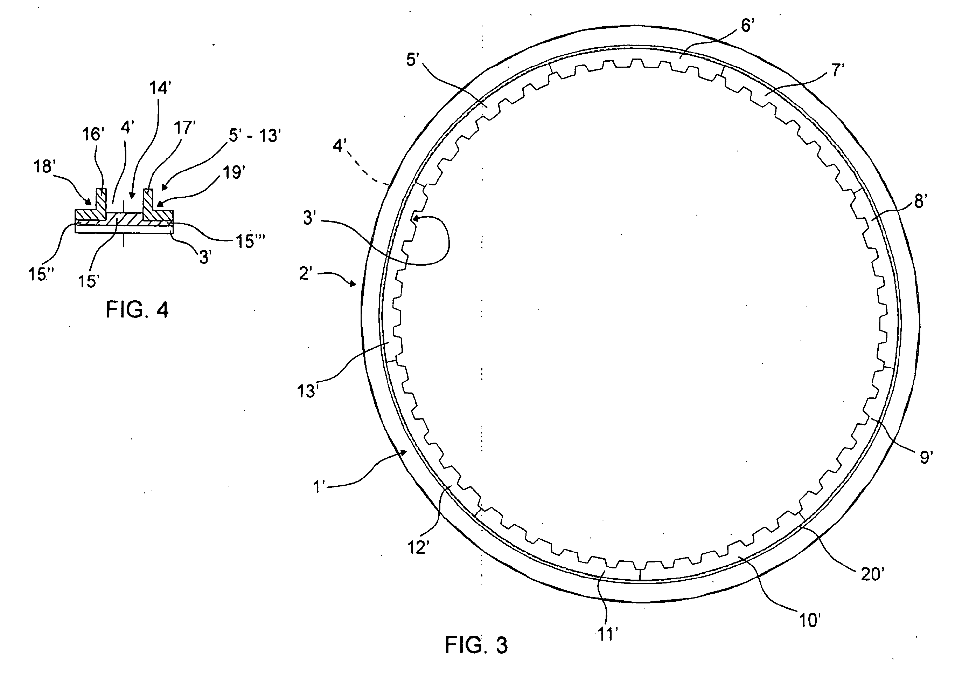

In Fig. 3 ist eine zweite Ausführungsform der erfindungsgemäßen Schiebemuffe 1' dargestellt, die ebenfalls einen Ringkörper 2' mit einer Innenverzahnung 3' und einer Schaltgabelnut 4' aufweist. Auch der Ringkörper 2' ist im Beispielsfalle aus neun Segmenten 5' bis 13' aufgebaut, die untereinander verschweißt sein können, wobei die Bezugsziffer 20' eine Schweißfuge verdeutlicht.

Im Unterschied zur Ausführungsform gemäß Fig. 1 weisen die Ringkörpersegmente 5' bis 13' einen Segmentkörper 14' auf, der einen Basiskörper 15' umfasst, an dessen Randbereichen 15'' und 15''' verminderter Dicke Ringe 18' und 19' befestigt sind, wie beispielsweise über eine Schweißung oder eine Lötung. Wie Fig. 4 verdeutlicht, sind die Ringe 18' und 19' im Querschnitt L-förmig ausgebildet und umfassen die den Stegen 16 und 17 entsprechenden Stege 16' und 17' zur Begrenzung der Gleitsteinnut 4'. Im Gesamtaufbau entspricht daher die Ausführungsform gemäß Fig. 4 derjenigen der Fig. 2.

Zur Herstellung der zuvor beschriebenen Ausführungsformen werden zunächst die Segmente 5 bis 13 bzw. 5' bis 13' hergestellt. Anschließend werden die Segmente untereinander miteinander verbunden, wozu wiederum entweder eine Verlötung oder eine Verschweißung oder auch ein anderes geeignetes Verbindungsverfahren verwendet werden kann.

### Bezugszeichenliste

- 1, 1': Schiebemuffe
- 2, 2': Ringkörper
- 3, 3': Innenverzahnung
- 4, 4': Schaltgabelnut
- 5-13, 5'-13': Ringkörpersegmente
- 14, 14': Segmentkörper
- 15, 15': Basiskörper
- 15'', 15''': Randbereiche von 13'
- 16, 16': Stege
- 17, 17': Stege
- 18', 19': Ringe
- 20': Schweißfuge

## Patentansprüche

1. Schiebemuffe (1; 1') für eine Synchronisiereinheit eines KFZ-Schaltgetriebes
- mit einem Ringkörper (2; 2'), der eine Innenverzahnung (3; 3') und im Bereich seines Aussenumfangs eine Schaltgabelnut (4; 4') aufweist,
**dadurch gekennzeichnet,**
- **dass** der Ringkörper (2; 2') aus zumindest zwei Segmenten (5-13; 5'-13') zusammengesetzt ist, die an ihrem Innenumfang eine Innenverzahnung aufweisen.

2. Schiebemuffe nach Anspruch 1, **dadurch gekennzeichnet, dass** die Segmente (5-13) einteilig sind.

3. Schiebemuffe nach Anspruch 1, **dadurch gekennzeichnet, dass** die Segmente (5'-13') einen Segmentkörper (14') mit einem Basiskörper (15') aufweisen, der Randbereiche (15", 15"') verminderter Dicke aufweist.

4. Schiebemuffe nach Anspruch 3, **dadurch gekennzeichnet, dass** Ringe (18', 19') mit den Randbereichen (15", 15"') verschweisst sind.

5. Schiebemuffe nach Anspruch 3, **dadurch gekennzeichnet, dass** die Bauteile (15', 18', 19') der Segmente (5'-13') miteinander verlötet sind.

6. Verfahren zur Herstellung einer Schiebemuffe, die einen Ringkörper (2; 2') mit einer Innenverzahnung (3; 3') und einer Schaltgabelung (4; 4') aufweist, wobei der Ringkörper (2; 2') aus zumindest zwei Segmenten (5-13; 5'-13') zusammengesetzt ist, die an ihrem Innenumfang eine Innenverzahnung aufweisen, **gekennzeichnet durch** folgende Herstellungsschritte:
- Ausbilden von Ringkörpersegmenten (2; 2');
- Verbinden der Ringkörpersegmente (2; 2').

7. Verfahren nach Anspruch 6, **dadurch gekennzeichnet, dass** die Segmente (5-13) einteilig ausgebildet werden.

8. Verfahren nach Anspruch 6, **dadurch gekennzeichnet, dass** die Segmente (2') mit einem Basiskörper (13') mit Randbereichen (15", 15"') verminderter Dicke ausgebildet werden.

9. Verfahren nach Anspruch 8, **dadurch gekennzeichnet, dass** Ringe (18', 19') mit den Randbereichen (15", 15"') verschweisst oder verlötet werden.

10. Verfahren nach einem der Ansprüche 6 bis 9, **dadurch gekennzeichnet, dass** die Ringkörpersegmente (5-13; 5'-13') miteinander verschweisst oder verlötet werden.

## Claims

1. A sliding sleeve (1; 1') for a synchronizer unit of a motor vehicle manual transmission,
- comprising an annular body (2; 2') which has an internal toothing (3; 3') and a shift fork groove (4; 4') in the region of its outer circumference,
**characterized in that**
- the annular body (2; 2') is composed of at least two segments (5-13; 5'-13') each having an internal toothing on its inner circumference.

2. The sliding sleeve according to claim 1, **characterized in that** the segments (5-13) are in one piece.

3. The sliding sleeve according to claim 1, **characterized in that** the segments (5'-13') include a segment body (14') with a base body (15') having edge portions (15", 15"') of a reduced thickness.

4. The sliding sleeve according to claim 3, **characterized in that** rings (18', 19') are welded to the edge portions (15", 15"').

5. The sliding sleeve according to claim 3, **characterized in that** the components (15', 18', 19') of the segments (5'-13') are brazed to each other.

6. A method of manufacturing a sliding sleeve which includes an annular body (2; 2') having an internal toothing (3; 3') and a shift fork (4; 4'), the annular body (2; 2') being composed of at least two segments (5-13; 5'-13') each having an internal toothing on its inner circumference, **characterized by** the following manufacturing steps:
- forming annular body segments (2; 2');
- connecting the annular body segments (2; 2').

7. The method according to claim 6, **characterized in that** the segments (5-13) are formed in one piece.

8. The method according to claim 6, **characterized in that** the segments (2') are formed with a base body (13') having edge portions (15", 15"') of a reduced thickness.

9. The method according to claim 8, **characterized in that** rings (18', 19') are welded or brazed to the edge portions (15", 15"').

10. The method according to any of claims 6 to 9, **characterized in that** the annular body segments (5-13; 5'-13') are welded or brazed to each other.

## Revendications

1. Manchon coulissant (1 ; 1') pour une unité de synchronisation d'une boîte de vitesses de véhicule automobile
- comportant un corps annulaire (2 ; 2') qui présente une denture intérieure (3 ; 3') et une gorge de fourchette de changement de vitesse (4 ; 4') dans la zone de sa périphérie extérieure,
**caractérisé en ce que**
- le corps annulaire (2 ; 2') est composé d'au moins deux segments (5-13 ; 5'-13') qui présentent une denture intérieure sur leur périphérie intérieure.

2. Manchon coulissant selon la revendication 1, **caractérisé en ce que** les segments (5-13) sont d'une seule pièce.

3. Manchon coulissant selon la revendication 1, **caractérisé en ce que** les segments (5'-13') comportent un corps de segment (14') avec un corps de base (15') qui présente des zones de bordure (15", 15"') d'épaisseur réduite.

4. Manchon coulissant selon la revendication 3, **caractérisé en ce que** des anneaux (18', 19') sont soudés aux zones de bordure (15", 15"').

5. Manchon coulissant selon la revendication 3, **caractérisé en ce que** les composants (15', 18', 19') des segments (5'-13') sont brasés les uns aux autres.

6. Procédé de fabrication d'un manchon coulissant qui présente un corps annulaire (2 ; 2') comportant une denture intérieure (3 ; 3') et une fourchette de changement de vitesse (4 ; 4'), le corps annulaire (2 ; 2') étant composé d'au moins deux segments (5-13; 5'-13') qui présentent une denture intérieure sur leur périphérie intérieure, **caractérisé par** les étapes de fabrication suivantes :
- réalisation de segments de corps annulaire (2 ; 2') ;
- assemblage des segments de corps annulaire (2 ; 2').

7. Procédé selon la revendication 6, **caractérisé en ce que** les segments (5-13) sont réalisés d'une seule pièce.

8. Procédé selon la revendication 6, **caractérisé en ce que** les segments (2') sont réalisés avec un corps de base (13') qui présente des zones de bordure (15", 15"') d'épaisseur réduite.

9. Procédé selon la revendication 8, **caractérisé en ce que** des anneaux (18', 19') sont soudés ou brasés aux zones de bordure (15", 15"').

10. Procédé selon l'une des revendications 6 à 9, **caractérisé en ce que** les segments de corps annulaire (5-13 ; 5'-13') sont soudés ou brasés les uns aux autres.
